# EUROPEAN PATENT APPLICATION

(11) **EP 4 848 351 A1**
(43) Date of publication of application: **02.12.2026**
(21) Application number: 26175691.0
(22) Date of filing: 30.04.2026
(51) Int. Cl.: H01M 4/13, H01M 4/62, H01M 4/78

(54) **ELECTRODE AND BATTERY**

(30) Priority: 30.05.2025 JP 2025090798
(71) Applicant: Toyota Jidosha Kabushiki Kaisha, Toyota-shi, Aichi-ken 471-8571 (JP)
(72) Inventor: KINTSU, Yusuke, Toyota-shi, 471-8571 (JP); UEDA, Masashi, Toyota-shi, 471-8571 (JP); KAZAMA, Daichi, Toyota-shi, 471-8571 (JP); KIDA, Tomohisa, Toyota-shi, 471-8571 (JP); IKEDA, Takenori, Toyota-shi, 471-8571 (JP); SATO, Tomohiro, Toyota-shi, 471-8571 (JP); HE, Yu, Toyota-shi, 471-8571 (JP); MIKI, Nariaki, Toyota-shi, 471-8571 (JP)
(74) Representative: Kuhnen & Wacker Patent- und Rechtsanwaltsbüro PartG mbB

(57) **Abstract**

An electrode comprises a current collector (20) and an electrode film (10) in this order. The electrode film (10) comprises an electrode active material and a fibrous binder. In a cross section of the electrode film (10), a gap (6) is formed between a first wall surface (6a) and a second wall surface (6b) that face each other. The first wall surface (6a) is closer to the current collector (20) than the second wall surface (6b) is. In the gap (6), the fibrous binder extends from the first wall surface (6a) to the second wall surface (6b).

## Description

### CROSS REFERENCE TO RELATED APPLICATIONS

This nonprovisional application is based on Japanese Patent Application No. 2025-090798 filed on May 30, 2025, with the Japan Patent Office, the entire contents of which are hereby incorporated by reference.

### BACKGROUND

### Field

The present disclosure relates to an electrode and a battery.

### Description of the Background Art

WO2024/205627 discloses a dry electrode film.

### SUMMARY

An electrode includes an electrode film. The electrode film includes an electrode active material and a binder. The electrode film is also referred to as "an active material layer", "a composite material layer", and the like, for example. From the viewpoints of electrolyte solution retention and the like, for example, forming a gap in the electrode film is investigated. However, in the vicinity of the gap, the electrode active material can fall into the gap.

An object of the present disclosure is to provide an electrode that includes an electrode film in which a gap is formed but an electrode active material tends not to fall into the gap.

Hereinafter, the technical configuration and effects of the present disclosure will be described. It should be noted that the action mechanism includes presumption. The action mechanism does not limit the technical scope of the present disclosure.
1. An electrode according to one aspect of the present disclosure comprises a current collector and an electrode film in this order. The electrode film comprises an electrode active material and a fibrous binder. In a cross section of the electrode film, a gap is formed between a first wall surface and a second wall surface that face each other. The first wall surface is closer to the current collector than the second wall surface is. In the gap, the fibrous binder extends from the first wall surface to the second wall surface.
   The electrode film comprises a fibrous binder. With the fibrous binder extending to bind the wall surfaces of the gap to each other, it is expected that the electrode active material tends not to fall into the gap.
2. The electrode according to "1" above may include the following configuration, for example. Each of the first wall surface and the second wall surface extends in a direction crossing a thickness direction of the electrode film.
   Usually, when the gap grows in a direction crossing the thickness direction, the electrode active material tends to fall into the gap. With the fibrous binder extending to bind the wall surfaces of the gap to each other, it is expected that the electrode active material tends not to fall into the gap.
3. The electrode according to "1" or "2" above may include the following configuration, for example. The gap has an aspect ratio of 2 or more. The aspect ratio refers to a ratio of a major-axis diameter of the gap to a minor-axis diameter thereof in a cross section of the electrode film.
   A gap having an aspect ratio of 2 or more tends to grow to become a large crack. With the fibrous binder extending to bind the wall surfaces of the gap to each other, it is expected that the gap tends not to grow.
4. The electrode according to any one of "1" to "3" above may include the following configuration, for example. A ratio of a major-axis diameter of the gap to an average major-axis diameter of the electrode active material is 3 or more.
   When the electrode film has a gap larger than a particle of the electrode active material, the electrode active material in the vicinity of the gap tends to fall into the gap. With the fibrous binder extending to bind the wall surfaces of the gap to each other, it is expected that the electrode active material in the vicinity of the gap tends not to fall into the gap even when the gap is large.
5. The electrode according to any one of "1" to "4" above may include the following configuration, for example. In the gap, a straight line having a length of 50 µm drawn to extend parallel to a major-axis diameter of the gap crosses five or more pieces of the fibrous binder.
   The number of the pieces of the fibrous binder crossing the straight line having a length of 50 µm in the gap is an index of the density of the fibrous binder in the gap. Hereinafter, this number is also referred to as "fiber density [unit, pieces/50 µm]". With the fiber density being 5 pieces/50 µm or more, it is expected that the electrode active material tends not to fall into the gap.
6. The electrode according to any one of "1" to "5" above may include the following configuration, for example. The electrode film is a self-standing film.
   The self-standing film may be formed as a result that the fibrous binder binds particles of the electrode active material.
7. The electrode according to any one of "1" to "6" above may include the following configuration, for example. A cross section of the current collector has a wavy shape in which crests and troughs alternate. Between the crests that are adjacent to each other, the gap is formed.
   For example, the electrode film (a self-standing film) may be affixed to the current collector having a wavy shape and thereby the electrode may be produced. At the time of affixation of the electrode film, the current collector is stretched in a manner that the distance between the crests of the wavy shape increases. The electrode film may follow the change of the shape of the current collector, and thereby a part of the electrode film may be torn and a gap may be formed between the crests. Furthermore, at the time when a part of the electrode film is torn, a fibrous binder may be formed extending to connect the wall surfaces to each other.
8. A battery according to one aspect of the present disclosure comprises the electrode according to any one of "1" to "7" above.
9. The battery according to "8" above may include the following configuration, for example. The battery has a bipolar structure.

In the following, an embodiment of the present disclosure (which may be simply called "the present embodiment" hereinafter) will be described. It should be noted that the present embodiment does not limit the technical scope of the present disclosure. The present embodiment is illustrative in any respect. The present embodiment is non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic view illustrating an example of an electrode according to the present embodiment.
Fig. 2 is a schematic cross-sectional view illustrating an electrode according to the present embodiment.
Fig. 3 is a conceptual view of an example of a method for forming a gap according to the present embodiment.
Fig. 4 is a schematic perspective view illustrating a first battery according to the present embodiment.
Fig. 5 is a schematic view of a cross section cut along the line V-V in Fig. 4.
Fig. 6 is a schematic view illustrating a second battery according to the present embodiment.

### DESCRIPTION OF THE PREFERRED EMBODIMENTS

### Terms and Phrases

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Expressions such as "first" and "second" are used solely for differentiating a plurality of elements from each other. Such expressions do not limit the scope of these elements. For example, these expressions are independent of the order and the significance of these elements.

For example, the expression "at least one of A and B" includes "A or B" and "A and B". "At least one of A and B" may also be expressed as "A and/or B".

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

"Self-standing film" refers to a film that is capable of maintaining its film shape by itself without a support.

"Electrode" collectively refers to a positive electrode, a negative electrode, and a bipolar electrode.

For example, image analysis of an SEM (Scanning Electron Microscope) image and the like may be carried out with software. For example, "ImageJ" and the like may be used. The magnification for SEM examination and the like may be changed as appropriate to be suitable for the measurement target. The magnification for examination may be from 1000 times to 20000 times, for example.

A numerical range such as "(from) m% to n%" includes both the upper limit and the lower limit, unless otherwise specified. That is, "(from) m% to n%" means a numerical range of "not less than m% and not more than n%". Moreover, "not less than m% and not more than n%" includes "more than m% and less than n%". Each of "not less than" (or "or more") and "not more than" (or "or less") is represented by an inequality symbol with an equality symbol, e.g., "≤, ≥". Each of "more than" and "less than" is represented by an inequality symbol without an equality symbol, e.g., "<, >". Any numerical value selected from a certain numerical range may be used as a new upper limit or a new lower limit. For example, any numerical value from a certain numerical range may be combined with any numerical value described in another location of the present specification or in a table or a drawing to set a new numerical range. For example, a numerical range (a span) expressed as "a range defined by any one or two endpoints selected from the group consisting of a, b, c, and d" includes "a≤x", "x≤a", "b≤x", "x≤b", "c≤x", "x≤c", "d≤x", "x≤d", "a≤x≤b", "a≤x≤c", "a≤x≤d", "b≤x≤c", "b≤x≤d", and "c≤x≤d". Each of them may or may not include the endpoints. More specifically, the above-mentioned range includes not only "a≤x" but also "a<x", for example. The above-mentioned range includes not only "a≤x≤b" but also "a<x≤b", "a≤x<b", and "a<x<b", for example.

All the numerical values are regarded as being modified by the term "about". The term "about" may mean ±5%, ±3%, ±1%, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values and the like is merely an example. It is possible to use a product similar to the apparatus and/or the like presented as an example. When a similar product is used, the measurement conditions may be adjusted to be suitable for the apparatus.

"Fibrous" means that the aspect ratio (the ratio of the major-axis diameter to the minor-axis diameter) is 10 or more. A substance having an aspect ratio of less than 10 is regarded as being "particulate". The aspect ratio of a fibrous substance (the ratio of the fiber length to the fiber diameter) may be 100 or more, for example. The minor-axis diameter, the major-axis diameter, the fiber diameter, and the fiber length are measured by a microscope method. The aspect ratio is the arithmetic mean of ten measurement targets. The length of the short side of a minimum bounding rectangular "MBR" of the measurement target is regarded as the minor-axis diameter, and the length of the long side is regarded as the major-axis diameter. The fiber diameter refers to the dimension in the direction orthogonal to the axial direction of the measurement target. The fiber length refers to the total length in the axial direction.

A chemical formula and a general formula represent a typical example of a compound. A compound may have a stoichiometric composition, or may have a non-stoichiometric composition. For example, "Al₂O₃" is not limited to a compound where the ratio in amount of substance (the molar ratio) is "Al/O=2/3". "Al₂O₃" represents a compound that includes Al and O in any ratio in amount of substance, unless otherwise specified. For example, the compound may be doped with a trace element. Some of Al and/or O may be replaced by another element.

The chemical composition of a compound may be measured by inductively coupled plasma atomic emission spectroscopy (ICP-AES). A sample (for example, a positive electrode active material) in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

### Electrode

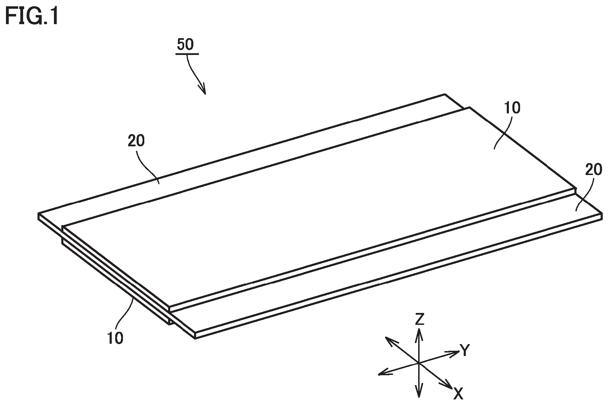

Fig. 1 is a schematic view illustrating an example of an electrode according to the present embodiment. An electrode 50 is for a battery. Electrode 50 may be used in any type of battery system. The battery may be a lithium-ion battery, a sodium-ion battery, a nickel-metal hydride battery, a nickel-zinc battery, and/or the like, for example. In the present embodiment, application to a lithium-ion battery is described as an example. The battery may include a liquid electrolyte, a gelled electrolyte, a solid electrolyte, and/or the like. In other words, the battery may be a liquid-type battery, a polymer battery, a solid-state battery, an all-solid-state battery, and/or the like. "Solid-state battery" refers to a battery including a solid electrolyte as well as other electrolytes. The above-mentioned battery may be a wound-type one, or may be a stack-type one, for example. The battery may have a monopolar structure, or may have a bipolar structure, for example. Details of the battery will be described below.

The planar shape of electrode 50 is not particularly limited. The planar shape of electrode 50 may be belt-like, rectangular, circular, and/or the like, for example. Electrode 50 includes a current collector 20 and an electrode film 10 in this order in the thickness direction (the Z-axis direction). For example, electrode film 10 may be placed directly on a surface of current collector 20. For example, between current collector 20 and electrode film 10, an adhesive layer, a conductive layer, and/or the like may be interposed. For example, electrode film 10 may be placed on only one side of current collector 20. Electrode film 10 may be placed on both sides of current collector 20. When electrode films 10 on the two sides have the same polarity, a monopolar electrode (a positive electrode or a negative electrode) is formed. When electrode films 10 on the two sides have different polarities, a bipolar electrode is formed.

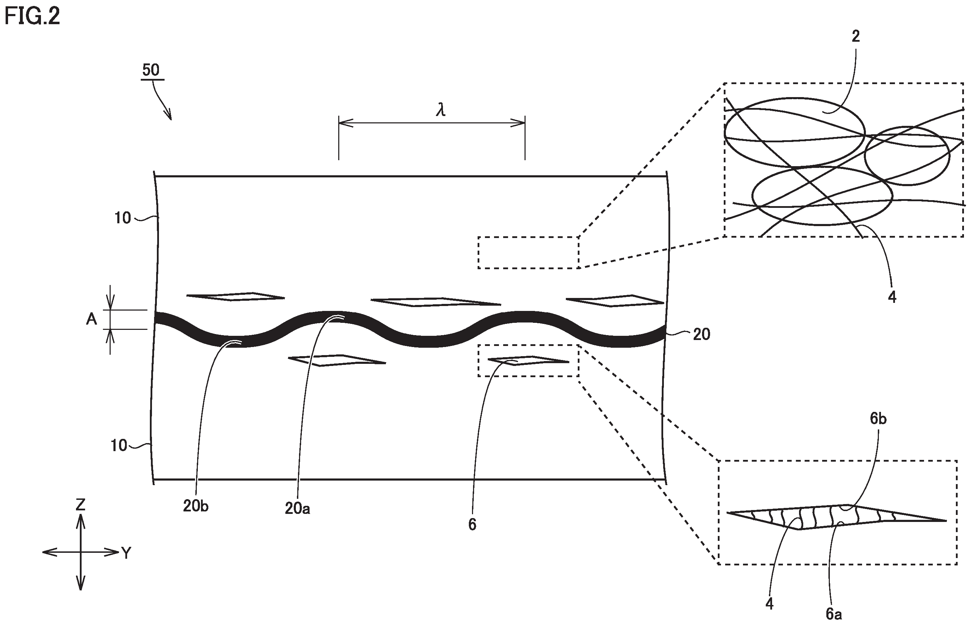

Fig. 2 is a schematic cross-sectional view illustrating an electrode according to the present embodiment. Electrode film 10 includes an electrode active material 2 and a fibrous binder 4. In a cross section of electrode film 10, a gap 6 is formed. Gap 6 is formed between a first wall surface 6a and a second wall surface 6b. First wall surface 6a and second wall surface 6b face each other. First wall surface 6a is closer to current collector 20 than second wall surface 6b is. In gap 6, fibrous binder 4 extends from first wall surface 6a to second wall surface 6b. It is expected that fibrous binder 4 in gap 6 inhibits falling of the electrode active material into the gap.

Each of first wall surface 6a and second wall surface 6b may be a surface of (a particle of) electrode active material 2. Each of first wall surface 6a and second wall surface 6b may extend in a linear fashion, a curved fashion, or a zigzag fashion. For example, each of first wall surface 6a and second wall surface 6b may extend in a direction crossing the thickness direction of electrode film 10 (the Z-axis direction). For example, each of first wall surface 6a and second wall surface 6b may extend along the thickness direction of electrode film 10.

Gap 6 may have an aspect ratio of 2 or more, for example. The aspect ratio refers to the ratio of the major-axis diameter of gap 6 to the minor-axis diameter of gap 6 in a cross section of electrode film 10. The length of the short side of a minimum bounding rectangular "MBR" of the gap is the minor-axis diameter, and the length of the long side is the major-axis diameter. The aspect ratio of gap 6 may be in a range defined by any one or two endpoints selected from the group consisting of 2, 3, 4, 5, 6, 7, 8, 9, 10, 20, and 30, for example. The aspect ratio of gap 6 may be in the range of 2 to 30, for example.

The ratio of the major-axis diameter of gap 6 to the average major-axis diameter of electrode active material 2 may be 3 or more, for example. This ratio may be in a range defined by any one or two endpoints selected from the group consisting of 3, 4, 5, 6, 7, 8, 9, 10, 15, and 20, for example. This ratio may be in the range of 3 to 20, for example. It should be noted that the average major-axis diameter of the electrode active material refers to the arithmetic mean of the major-axis diameters of randomly-selected ten particles of the electrode active material. The major-axis diameter of each particle refers to the length of the long side of an MBR, similarly to the major-axis diameter of the gap.

The major-axis diameter of gap 6 may be in a range defined by any one or two endpoints selected from the group consisting of 50 µm, 75 µm, 100 µm, 125 µm, 150 µm, 175 µm, 200 µm, 250 µm, 300 µm, 400 µm, and 500 µm, for example. The major-axis diameter of gap 6 may be in the range of 50 µm to 500 µm, for example.

The fiber density in gap 6 is measured by the following procedure. In gap 6, a straight line L having a length of 50 µm is drawn. The straight line L is parallel to the major-axis diameter of gap 6. The number of pieces of fibrous binder 4 crossing the straight line L may be counted to determine the fiber density [unit, pieces/50 µm]. The fiber density in gap 6 may be in a range defined by any one or two endpoints selected from the group consisting of 5 pieces/50 µm, 10 pieces/50 µm, 15 pieces/50 µm, 20 pieces/50 µm, 25 pieces/50 µm, 30 pieces/50 µm, 40 pieces/50 µm, and 50 pieces/50 µm, for example. The fiber density in gap 6 may be in the range of 5 pieces/50 µm to 50 pieces/50 µm, for example.

### Current Collector

Current collector 20 is electrically conductive. Current collector 20 may include a metal foil sheet, an electrically-conductive resin film, and/or the like, for example. Current collector 20 may include at least one selected from the group consisting of an Al foil sheet, an Al alloy foil sheet, a Cu foil sheet, a Cu alloy foil sheet, a Ni foil sheet, a Ti foil sheet, and a stainless steel (SUS) foil sheet, for example. When electrode 50 is a bipolar electrode, current collector 20 may be formed by bonding an Al foil sheet and a Cu foil sheet together with an adhesive agent, for example. The thickness of current collector 20 may be in a range defined by any one or two endpoints selected from the group consisting of 5 µm, 10 µm, 15 µm, 20 µm, 25 µm, 30 µm, 35 µm, 40 µm, 45 µm, and 50 µm, for example. The thickness of current collector 20 may be in the range of 5 µm to 50 µm, for example.

Current collector 20 may be flat, for example. As illustrated in Fig. 2, a cross section of current collector 20 may have a wavy shape, for example. The wavy shape has crests 20a and troughs 20b in an alternate manner. The wavy shape may be formed in the length direction of current collector 20, or in the width direction thereof. Between adjacent crests 20a, gap 6 may be formed. It should be noted that in the case where electrode film 10 is formed on both sides, crest 20a viewed from one side may appear as trough 20b from the other side. The wavelength "λ" refers to the distance between crests 20a. The wavelength may be uniform or may vary. The wavelength may be in a range defined by any one or two endpoints selected from the group consisting of 50 µm, 75 µm, 100 µm, 125 µm, 150 µm, 175 µm, 200 µm, 250 µm, 300 µm, 400 µm, and 500 µm, for example. The wavelength may be in the range of 50 µm to 500 µm, for example.

The amplitude "A" refers to the height of crest 20a or the depth of trough 20b. The amplitude may be uniform or may vary. The amplitude may be in a range defined by any one or two endpoints selected from the group consisting of 5 µm, 10 µm, 15 µm, 20 µm, 25 µm, 30 µm, 35 µm, 40 µm, 45 µm, and 50 µm, for example. The amplitude may be in the range of 5 µm to 50 µm, for example.

The method for forming the wavy shape is not particularly limited. For example, the wavy shape may be formed by corrugation machining. For example, current collector 20 (such as a metal foil sheet) may be passed through a gap between a pair of engaging toothed wheels and thereby the wavy shape of current collector 20 may be formed.

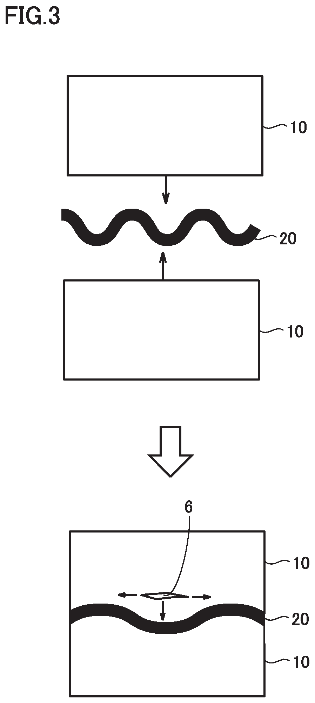

Fig. 3 is a conceptual view of an example of a method for forming a gap according to the present embodiment. For example, current collector 20 having a wavy shape is prepared. Electrode film 10 in the form of a self-standing film is prepared. Electrode film 10 is pressed against current collector 20 and thereby electrode film 10 is affixed to current collector 20. At the time of affixation, current collector 20 is stretched. More specifically, the amplitude may decrease and the wavelength may increase. Electrode film 10 thus affixed to current collector 20 is partly stretched. As a result, a part of electrode film 10 may be torn and thereby gap 6 may be formed. Gap 6 may be formed in the vicinity of current collector 20. For example, in the thickness direction, gap 6 may be formed at a position in electrode film 10 closer to current collector 20 than to the other side. After electrode film 10 is affixed, despite the wavy shape of current collector 20, the surface of electrode film 10 may be flat.

### Electrode Film

Electrode film 10 may be either a non-self-standing film or a self-standing film. The self-standing film may be strong enough to withstand roll transportation and the like without a support such as current collector 20, for example. The tensile strength of the self-standing film may be in a range defined by any one or two endpoints selected from the group consisting of 0.1 MPa, 0.2 MPa, 0.3 MPa, 0.5 MPa, 0.6 MPa, 0.7 MPa, 0.8 MPa, 0.9 MPa, and 1.0 MPa, for example. The tensile strength of the self-standing film may be in the range of 0.1 MPa to 1.0 MPa, for example. The tensile strength of the self-standing film may be 0.5 MPa or more, for example. When the self-standing film has a tensile strength of 0.5 MPa or more, web handling and/or the like is expected to be easier to carry out, for example.

The dimensions (such as the thickness, length, width, and the like) of electrode film 10 may be freely changed. The thickness of electrode film 10 may be in a range defined by any one or two endpoints selected from the group consisting of 5 µm, 10 µm, 25 µm, 50 µm, 75 µm, 100 µm, 150 µm, 200 µm, 250 µm, 300 µm, 400 µm, 500 µm, 600 µm, 700 µm, 800 µm, 900 µm, and 1000 µm, for example. The thickness of electrode film 10 may be in the range of 5 µm to 1000 µm, for example. The density of electrode film 10 may be in a range defined by any one or two endpoints selected from the group consisting of 0.5 g/cm³, 1.0 g/cm³, 1.5 g/cm³, 2.0 g/cm³, 2.5 g/cm³, 3.0 g/cm³, 3.5 g/cm³, 4.0 g/cm³, 4.5 g/cm³, and 5.0 g/cm³, for example. The density of electrode film 10 may be in the range of 0.5 g/cm³ to 5.0 g/cm³, for example.

Electrode film 10 may include a freely-selected component in addition to the electrode active material and the fibrous binder. Electrode film 10 may further include a conductive material, a solid electrolyte, a non-fibrous binder, and/or the like, for example. Electrode film 10 may include a first binder in a mass fraction of 0.1% to 10%, a second binder in 0 to 10%, a conductive material in 0 to 10%, and a solid electrolyte in 0 to 30%, with the remainder being made up of the electrode active material, for example.

### Electrode Active Material

The electrode active material is in the form of powder. The particle size distribution of the electrode active material may be monomodal, for example. The particle size distribution may be either a volume-based distribution or a number-based distribution. The volume-based distribution may be measured by laser diffraction. The number-based distribution may be measured by a microscope method. "D50" refers to a particle size in cumulative distribution at which cumulative frequency reaches 50%. The D50 of the electrode active material may be in a range defined by any one or two endpoints selected from the group consisting of 0.1 µm, 0.5 µm, 1 µm, 3 µm, 5 µm, 10 µm, 15 µm, 20 µm, 25 µm, and 30 µm, for example. The D50 of the electrode active material may be in the range of 0.1 µm to 30 µm, for example.

The particle size distribution of the electrode active material may be either bimodal or multimodal, for example. When the particle size distribution (frequency distribution) is bimodal, for example, particles that belong to the peak of larger particle sizes are "large particles". Particles that belong to the peak of smaller particle sizes are "small particles". The modal diameter of each peak may be regarded as the particle size of the corresponding particles. "Modal diameter" refers to the particle size for the peak top in the frequency distribution. The ratio "D_{L}/D_{S}" of the particle size "D_{L}" of the large particles to the particle size "D_{S}" of the small particles may be in a range defined by any one or two endpoints selected from the group consisting of 1.2, 1.5, 2.0, 3.0, 4.0, and 5.0, for example. Relationships such as "1.2≤D_{L}/D_{S}≤5.0" may be satisfied, for example.

The electrode active material may be either in the form of primary particles or in the form of secondary particles. The particle shape of the electrode active material is not particularly limited. The particle shape may be spherical, elliptically spherical, flake-like, plate-like, columnar, lump-like, amorphous, and/or the like, for example.

The electrode active material may be in the form of granules. The method for forming the granules is not particularly limited. For example, the granules may be formed by spray drying, stirring granulation, and/or the like. By granulation, it is possible to adjust the sphericity of the granules (secondary particles). "Sphericity" refers to the circularity in an SEM image (a two-dimensional image). The sphericity (circularity) is determined by the following equation. As the sphericity, the arithmetic mean of ten particles is used. $ψ = 4 πS / {L}^{2}$
ψ: Sphericity (circularity)
π: Circular constant
S: Cross-sectional area of particle (the area of a region surrounded by the contour of the particle)
L: Perimeter of particle (the length of the contour of the particle)

The sphericity "ψ" of the electrode active material may be in a range defined by any one or two endpoints selected from the group consisting of 0.1, 0.2, 0.3, 0.4, 0.5, 0.6, 0.7, 0.8, 0.9, and 1.0, for example. Relationships such as "0.1≤ψ≤1.0" may be satisfied, for example.

The aspect ratio of the electrode active material is not particularly limited. The aspect ratio of the electrode active material may be in a range defined by any one or two endpoints selected from the group consisting of 1, 1.2, 1.5, 1.8, 2, 3, 4, 5, 6, 7, 8, and 9, for example. The aspect ratio of the electrode active material may be in the range of 1 to 9, for example.

The electrode active material may be a negative electrode active material. The negative electrode active material may include, for example, at least one selected from the group consisting of natural graphite (flake graphite, spheroidized graphite), artificial graphite, soft carbon, hard carbon, silicon, silicon oxide, silicon-based alloy, silicon-carbon composite material "Si-C", lithium silicate, tin, tin oxide, tin-based alloy, and lithium titanate. For example, the spheroidized graphite may be covered with amorphous carbon. For example, natural graphite, artificial graphite, soft carbon, and hard carbon may be collectively referred to as "a carbon-based active material". The silicon may include any crystalline phase. The silicon may include at least one selected from the group consisting of a clathrate I type phase, a clathrate II type phase, and a diamond phase, for example. Si-C refers to a composite particle that includes at least one of silicon and silicon oxide as well as carbon. For example, silicon may be supported in the internal space of a carbon particle. The carbon particle may be either a graphite particle or an amorphous carbon particle. For example, silicon, silicon oxide, silicon-based alloy, and silicon-carbon composite material may be collectively referred to as "a Si-based active material".

The negative electrode active material may be a mixture of natural graphite and artificial graphite, for example. The mass ratio "(natural graphite):(artificial graphite)" may be in a range defined by two endpoints that are any two sets selected from the group consisting of "1:9", "2:8", "3:7", "4:6", "5:5", "6:4", "7:3", "8:2", and "9:1", for example. Relationships such as the mass ratio "(natural graphite): (artificial graphite)=1:9 to 9:1" may be satisfied, for example.

The negative electrode active material may be a mixture of a carbon-based active material and a Si-based active material, for example. The mass ratio "(carbon-based active material):(Si-based active material)" may be in a range defined by two endpoints that are any two sets selected from the group consisting of "1:99", "5:95", "10:90", "20:80", "30:70", "40:60", "50:50", "60:40", "70:30", "80:20", "90:10", "95:5", and "99:1", for example. Relationships such as the mass ratio "(carbon-based active material):(Si-based active material)=1:99 to 99:1" may be satisfied, for example.

The electrode active material may be a positive electrode active material. The positive electrode active material may include at least one selected from the group consisting of a lamellar compound, a rock salt-type compound, a spinel-type compound, and an olivine-type compound, for example. The positive electrode active material may be a mixture of a lamellar compound and an olivine-type compound, for example. The mass ratio "(lamellar compound):(olivine-type compound)" may be in a range defined by two endpoints that are any two sets selected from the group consisting of "1:9", "2:8", "3:7", "4:6", "5:5", "6:4", "7:3", "8:2", and "9:1", for example. Relationships such as the mass ratio "(lamellar compound):(olivine-type compound)=1:9 to 9:1" may be satisfied, for example.

The positive electrode active material may include at least one selected from the group consisting of Li[NiCoMn]O₂ (lamellar compound), Li[NiCoAl]O₂ (lamellar compound), LiMnO₂ (rock salt-type compound), Li[NiMn]₂O₄ (spinel-type compound), and Li[MnFe]PO₄ (olivine-type compound), for example. It should be noted that an expression such as [NiCoMn] means that the constituents within the parentheses [ ] are collectively regarded as a single unit in the entire composition ratio. As long as [NiCoMn] is collectively regarded as a single unit, the composition ratio of the individual constituents within the parentheses [ ] is not particularly limited. For example, the amount of one or more constituents in the composition ratio may be zero.

The lamellar compound may have a composition represented by the general formula "LiₓNiₐCo_{b}M_{c}O_{y}", for example. "x" in the formula may be in a range defined by any one or two endpoints selected from the group consisting of 0.1, 0.2, 0.3, 0.4, 0.5, 0.6, 0.7, 0.8, 0.9, 1.0, 1.1, 1.2, 1.3, 1.4, and 1.5, for example. Relationships such as "0.1≤x≤1.5" may be satisfied, for example. In the formula, the relationship "a+b+c=1" is satisfied. As long as this relationship is satisfied, the ranges of "a", "b", and "c" may be independently defined by any one or two endpoints selected from the group consisting of 0, 0.05, 0.1, 0.2, 0.3, 0.4, 0.5, 0.6, 0.7, 0.8, 0.9, and 1.0, for example. Relationships such as "0≤a≤1", "0≤b≤1", and "0≤c≤1" may be satisfied, for example. Relationships such as "0.5≤a≤0.9", "0.05≤b≤0.5", and "0.05≤c≤0.5" may be satisfied, for example. "M" in the formula may be at least one selected from the group consisting of Mn and Al, for example. "y" in the formula may be in a range defined by any one or two endpoints selected from the group consisting of 1.6, 1.7, 1.8, 1.9, 2.0, 2.1, 2.2, 2.3, and 2.4, for example. Relationships such as "1.6≤y≤2.4" may be satisfied, for example.

The lamellar compound may include at least one selected from the group consisting of LiₓNiO_{y}, LiₓCoO_{y}, LiₓMnO_{y}, LiₓNi_{1/3}Co_{1/3}Mn_{1/3}O_{y}, LiₓNi_{0.4}Co_{0.3}Mn_{0.3}O_{y}, LiₓNi_{0.5}Co_{0.2}Mn_{0.3}O_{y}, LiₓNi_{0.5}Co_{0.3}Mn_{0.2}O_{y}, LiₓNi_{0.5}Co_{0.4}Mn_{0.1}O_{y}, LiₓNi_{0.5}Co_{0.1}Mn_{0.4}O_{y}, LiₓNi_{0.6}Co_{0.3}Mn_{0.1}O_{y}, LiₓNi_{0.6}Co_{0.2}Mn_{0.2}O_{y}, LiₓNi_{0.6}Co_{0.1}Mn_{0.3}O_{y}, LiₓNi_{0.7}Co_{0.2}Mn_{0.1}O_{y}, LiₓNi_{0.7}Co_{0.1}Mn_{0.2}O_{y}, LiₓNi_{0.8}Co_{0.1}Mn_{0.1}O_{y}, LiₓNi_{0.8}Co_{0.15}Al_{0.05}O_{y}, and LiₓNi_{0.9}Co_{0.05}Mn_{0.05}O_{y}, for example. In each formula, relationships such as "0.1≤x≤1.5" and "1.6≤y≤2.4" may be satisfied, for example.

The olivine-type compound may have a composition represented by the general formula "LiMPO₄", for example. "M" in the formula may be at least one selected from the group consisting of Fe, Ni, Co, and Mn, for example.

The olivine-type compound may have a composition represented by the general formula "LiₓMn₁₋ₐFeₐPO_{y}", for example. "x" in the formula may be in a range defined by any one or two endpoints selected from the group consisting of 0.1, 0.2, 0.3, 0.4, 0.5, 0.6, 0.7, 0.8, 0.9, 1.0, 1.1, 1.2, 1.3, 1.4, and 1.5, for example. Relationships such as "0.1≤x≤1.5" may be satisfied, for example. "a" in the formula may be in a range defined by any one or two endpoints selected from the group consisting of 0, 0.1, 0.2, 0.3, 0.4, 0.5, 0.6, 0.7, 0.8, 0.9, and 1.0, for example. Relationships such as "0≤a≤1.0" and "0.1≤a≤0.5" may be satisfied, for example. "y" in the formula may be in a range defined by any one or two endpoints selected from the group consisting of 3.6, 3.7, 3.8, 3.9, 4.0, 4.1, 4.2, 4.3, and 4.4, for example. Relationships such as "3.6≤y≤4.4" may be satisfied, for example.

The olivine-type compound may include at least one selected from the group consisting of LiₓMnPO_{y}, LiₓMn_{0.9}Fe_{0.1}PO_{y}, LiₓMn_{0.8}Fe_{0.2}PO_{y}, LiₓMn_{0.7}Fe_{0.3}PO_{y}, LiₓMn_{0.6}Fe_{0.4}PO_{y}, LiₓMn_{0.5}Fe_{0.5}PO_{y}, LiₓMn_{0.4}Fe_{0.6}PO_{y}, LiₓMn_{0.3}Fe_{0.7}PO_{y}, LiₓMn_{0.2}Fe_{0.8}PO_{y}, LiₓMn_{0.1}Fe_{0.9}PO_{y}, and LiₓFePO_{y}, for example. In each formula, relationships such as "0.1≤x≤1.5" and "3.6≤y≤4.4" may be satisfied, for example.

The positive electrode active material may be doped with any dopant. The dopant may be either an interstitial one or an substitutional one. The dopant may include at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid, for example. The amount-of-substance fraction of the dopant (the doping amount) may be in a range defined by any one or two endpoints selected from the group consisting of 0.01%, 0.1%, 1%, 3%, and 5%, for example. The doping amount may be in the range of 0.01% to 5%, for example.

### Conductive Material

The conductive material may form an electron conduction path inside the electrode film 10. The conductive material may include at least one selected from the group consisting of acetylene black, Ketjenblack (registered trademark), thermal black, furnace black, carbon fibers, carbon nanotubes, graphene flakes, metal fibers, and metal powder, for example. In the case where the electrode active material is a positive electrode active material, the above-mentioned group of materials that may constitute the conductive material may further include natural graphite, artificial graphite, and the like, for example.

The conductive material may be in the form of powder, for example. The D50 of the conductive material may be smaller than that of the electrode active material. The D50 of the conductive material may be in a range defined by any one or two endpoints selected from the group consisting of 0.01 µm, 0.05 µm, 0.1 µm, 0.5 µm, 1 µm, 3 µm, and 5 µm, for example. The D50 of the conductive material may be in the range of 0.01 µm to 5 µm, for example.

The mass fraction of the conductive material in electrode film 10 may be in a range defined by any one or two endpoints selected from the group consisting of 0%, 0.1%, 0.5%, 1%, 2%, 3%, 4%, 5%, 6%, 7%, 8%, 9%, and 10%, for example. The mass fraction of the conductive material may be in the range of 0% to 10%, for example.

### Solid Electrolyte

The solid electrolyte may form an ion conduction path inside the electrode film 10. The solid electrolyte may include at least one selected from the group consisting of a sulfide solid electrolyte, a halide solid electrolyte, an oxide solid electrolyte, a hydride solid electrolyte, and a nitride solid electrolyte, for example. The sulfide solid electrolyte may include at least one selected from the group consisting of an amorphous phase, a crystalline phase, and a glass ceramic (crystallized glass) phase. The crystalline phase may be of argyrodite type, LGPS type, and/or the like, for example. The sulfide solid electrolyte may include, for example, at least one selected from the group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and Li₇PS₆. For example, "LiI-LiBr-Li₃PS₄" refers to a sulfide solid electrolyte produced by mixing LiI, LiBr, and Li₃PS₄ in a freely-selected ratio (in amount of substance). For example, the sulfide solid electrolyte may be produced by a mechanochemical method. The mixing ratio may be expressed with the number placed in front of each raw material. For example, "10LiI-15LiBr-75Li₃PS₄" means that the mixing ratio (in amount of substance) is "LiI:LiBr:Li₃PS₄=10:15:75".

The sulfide solid electrolyte may have a composition represented by the general formula "yLiI-zLiBr-(100-y-z)[xLi₂S-(1-x)P₂S₅]", for example. "x" in the formula may be in a range defined by any one or two endpoints selected from the group consisting of 0.1, 0.2, 0.25, 0.3, 0.4, 0.5, 0.6, 0.7, 0.75, 0.8, and 0.9, for example. Relationships such as "0.1≤x≤0.9" may be satisfied, for example. In the formula, the relationship "0<(100-y-z)≤100" is satisfied. As long as this relationship is satisfied, "y" and "z" may be independently in a range defined by any one or two endpoints selected from the group consisting of 0, 5, 10, 15, 20, 25, and 30. For example, relationships such as "0≤y≤30" and "0≤z≤30" may be satisfied.

The sulfide solid electrolyte may have a composition represented by the general formula "Li₄₋ₓM₁₋ₓPₓS₄", for example. "x" in the formula may be in a range defined by any one or two endpoints selected from the group consisting of 0, 0.1, 0.2, 0.3, 0.4, 0.5, 0.6, 0.7, 0.8, 0.9, and 1, for example. Relationships such as "0<x<1" may be satisfied, for example. "M" in the formula may include at least one selected from the group consisting of Al, Zn, In, Ge, Si, Sn, Sb, Ga, and Bi, for example.

The sulfide solid electrolyte may have a composition represented by the general formula "Li₁₀₊ₓGe₁₊ₓP₂₋ₓS₁₂", for example. "x" in the formula may be in a range defined by any one or two endpoints selected from the group consisting of 0, 0.1, 0.2, 0.3, 0.4, 0.5, 0.6, and 0.7, for example. Relationships such as "0<x≤0.7" may be satisfied, for example. A sulfide solid electrolyte represented by this formula may include an LGPS-type crystalline phase, for example.

The halide solid electrolyte may have a composition represented by the general formula "Li₆₋ₙₐMₐX₆", for example. "n" in the formula represents the oxidation number of "M". "M" may include an atom whose oxidation number is +3, for example. "M" in the formula may include an atom whose oxidation number is +4, for example. "M" may include at least one selected from the group consisting of Y, Al, Ti, Zr, Ca, and Mg, for example. Relationships such as "0<a<2" may be satisfied, for example. "X" in the formula may include at least one selected from the group consisting of F, Cl, Br, and I, for example.

The solid electrolyte may be in the form of powder, for example. The D50 of the solid electrolyte may be smaller than that of the electrode active material. The D50 of the solid electrolyte may be in a range defined by any one or two endpoints selected from the group consisting of 0.01 µm, 0.05 µm, 0.1 µm, 0.5 µm, 1 µm, 3 µm, and 5 µm, for example. The D50 of the solid electrolyte may be in the range of 0.01 µm to 5 µm, for example.

The volume fraction of the solid electrolyte in electrode film 10 may be in a range defined by any one or two endpoints selected from the group consisting of 0%, 1%, 5%, 10%, 20%, 30%, 40%, 50%, 60%, and 70%, for example. The volume fraction of the solid electrolyte may be in the range of 0% to 70%, for example.

### Fibrous Binder

For example, the fibrous binder may be formed by fiberization (fiber-formation, fibrillation) of a particulate binder (an aggregate) by application of shear force and the like. For example, the application of shear force to a particulate binder may be carried out by passing, through a gap between rolls, a composite material including the particulate binder (which is to be made into a fibrous binder) and the electrode active material. The particulate binder may be made into a fibrous binder, and as a result, electrode film 10 may be formed. The roll machining may be carried out once, or may be repeated multiple times. Prior to the roll machining, a shear force may be applied to the composite material with the use of a jet mill, a stirring granulator, and/or the like, for example. In addition to the application of shear force, heating at 30°C to 150°C may also be carried out to facilitate fibrillation, for example. The particulate binder may be fully fibrillated or partially fibrillated.

The fibrous binder includes a polymer composition, for example. The polymer composition may be a homopolymer, a copolymer, a polymer blend, or a polymer alloy. The fibrous binder may include polytetrafluoroethylene (PTFE) and/or the like, for example. The fibrous binder may also include a freely-selected additional component in addition to PTFE. The additional component may include at least one selected from the group consisting of polyolefin, cellulose, polyether, and polysiloxane, for example. The additional component and PTFE may form at least one selected from the group consisting of a polymer blend, a polymer alloy, and a copolymer. The mass fraction of PTFE or the mass fraction of a tetrafluoroethylene (TFE)-derived component in the fibrous binder may be in a range defined by any one or two endpoints selected from the group consisting of 0%, 10%, 20%, 30%, 40%, 50%, 60%, 70%, 80%, 90%, 95%, 99%, and 100%, for example. The mass fraction of PTFE in the fibrous binder may be in the range of 0% to 100%, for example.

The number average molecular weight "Mn" of the polymer constituting the fibrous binder may be in a range defined by any one or two endpoints selected from the group consisting of 10×10⁴, 50×10⁴, 100×10⁴, 150×10⁴, 200×10⁴, 300×10⁴, 400×10⁴, 500×10⁴, 1000×10⁴, 2000×10⁴, and 3000×10⁴, for example. The number average molecular weight may be in the range of 10×10⁴ to 3000×10⁴, for example. The number average molecular weight may be determined from the standard specific gravity, for example. The sample for the measurement is prepared in conformity with "ASTM D-4895 98". The standard specific gravity is measured by a water displacement method in conformity with "ASTM D-792".

The fiber diameter (the fibril diameter) of the fibrous binder may be in a range defined by any one or two endpoints selected from the group consisting of 1 nm, 5 nm, 10 nm, 15 nm, 20 nm, 50 nm, 100 nm, 200 nm, 500 nm, and 1000 nm, for example. The fiber diameter may be in the range of 1 nm to 1000 nm, for example.

The fibrous binder may form a fiber matrix. For example, the film shape may be maintained by the fiber matrix holding the electrode active material (powder). The fiber matrix may be evaluated in terms of fiber density, for example. The fiber density may be measured by the method described below, for example. A cross-sectional SEM image of electrode film 10 is prepared. At a freely-selected position in the cross-sectional SEM image, a straight line of 20 µm in length is drawn. Fibrous things that cross the straight line are counted, and thereby the fiber density [unit, pieces/20 µm] is determined. The fiber density is measured at three or more positions in the cross-sectional SEM image. The arithmetic mean of these three or more positions is used. The fiber density may be in a range defined by any one or two endpoints selected from the group consisting of 1, 2, 5, 10, 20, 40, 60, 80, and 100, for example. The fiber density may be in the range of 1 to 100, for example.

The mass fraction of the fibrous binder in electrode film 10 may be in a range defined by any one or two endpoints selected from the group consisting of 0.1%, 0.5%, 1%, 2%, 3%, 4%, 5%, 6%, 7%, 8%, 9%, and 10%, for example. The mass fraction of the fibrous binder in electrode film 10 may be in the range of 0.1% to 10%, for example.

### Non-Fibrous Binder

For example, the form of the non-fibrous binder is not particularly limited. For example, the non-fibrous binder may be in particulate form, in film form, amorphous, and/or the like. For example, the adhesive force of the non-fibrous binder may be more than that of the fibrous binder. For example, the non-fibrous binder may serve to make electrode film 10 adhere to current collector 20. For example, the non-fibrous binder may include at least one selected from the group consisting of polyvinylidene difluoride (PVdF), vinylidene difluoride-hexafluoropropylene copolymer (PVdF-HFP), carboxymethylcellulose (CMC), polyacrylic acid (PAA), polyvinyl alcohol (PVA), polyvinylpyrrolidone (PVP), polyethylene oxide (PEO), styrene-butadiene rubber (SBR), acrylonitrile butadiene rubber (NBR), polyethylene (PE), polypropylene (PP), polyacrylonitrile (PAN), polyoxyethylene alkyl ether, polyimide (PI), polyamide-imide (PAI), and derivatives of these, for example.

The mass fraction of the non-fibrous binder in electrode film 10 may be in a range defined by any one or two endpoints selected from the group consisting of 0%, 0.1%, 0.5%, 1%, 2%, 3%, 4%, 5%, 6%, 7%, 8%, 9%, and 10%, for example. The mass fraction of the non-fibrous binder in electrode film 10 may be in the range of 0% to 10%, for example.

The mass ratio "(fibrous binder):(non-fibrous binder)" may be in a range defined by two endpoints that are any two sets selected from the group consisting of "1:9", "2:8", "3:7", "4:6", "5:5", "6:4", "7:3", "8:2", "9:1", and "10:0", for example. Relationships such as the mass ratio "(fibrous binder):(non-fibrous binder)=1:9 to 10:0" may be satisfied, for example.

### Additional Component

Electrode film 10 may include a freely-selected additional component. The additional component may include an inorganic filler, an organic filler, a surface modifier, a dispersant, a lubricant, a flame retardant, a protective agent, a flux, a coupling agent, an adsorbent, and/or the like, for example. The additional component may include polyoxyethylene allylphenyl ether phosphate, zeolite, silane coupling agent, molybdenum sulfide, tungsten oxide, and/or the like, for example.

### First Battery

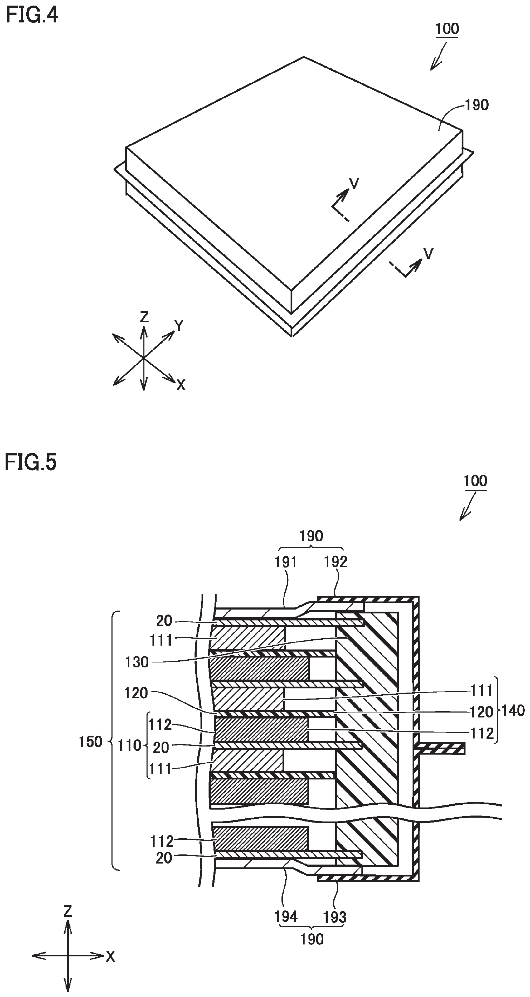

Fig. 4 is a schematic perspective view illustrating a first battery according to the present embodiment. Fig. 5 is a schematic view of a cross section cut along the line V-V in Fig. 4. A first battery 100 is an example of a battery according to the present embodiment. First battery 100 includes a first power generation element 150. First power generation element 150 is a stack-type one. First power generation element 150 has a bipolar structure. It should be noted that the power generation element may also be referred to as "an electrode assembly". Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In the drawings related to the present embodiment, the Z-axis direction corresponds to the perpendicular-to-plane direction. Each of the X-axis direction and the Y-axis direction is an example of an in-plane direction.

First battery 100 includes a first exterior package 190. First exterior package 190 accommodates first power generation element 150. First exterior package 190 may include a first current collector plate 191, a first laminated film 192, a second laminated film 193, and a second current collector plate 194, for example. First laminated film 192 and second laminated film 193 are joined to each other at an end in an in-plane direction. At the joint portion between first laminated film 192 and second laminated film 193, a sealing material (not illustrated) may be interposed between first laminated film 192 and second laminated film 193.

At the ends in the stacking direction (the Z-axis direction), first current collector plate 191 and second current collector plate 194 are joined to first power generation element 150, respectively. First laminated film 192 is joined to first current collector plate 191. Second laminated film 193 is joined to second current collector plate 194. At the joint portion between the current collector plate and the laminated film, a sealing material (not illustrated) may be interposed between the current collector plate and the laminated film.

### First Power Generation Element

First power generation element 150 includes a plurality of bipolar electrodes 110 and a plurality of first separators 120. In the perpendicular-to-plane direction (the Z-axis direction), bipolar electrodes 110 and first separators 120 are alternately stacked. In the perpendicular-to-plane direction, each bipolar electrode 110 includes a positive electrode active material layer 111, current collector 20, and a negative electrode active material layer 112 in this order. In an in-plane direction (for example, the X-axis direction), current collector 20 extends outwardly beyond positive electrode active material layer 111 and negative electrode active material layer 112. For example, current collector 20 may extend outwardly beyond positive electrode active material layer 111 and negative electrode active material layer 112 along the entire periphery in an in-plane direction. At least one of positive electrode active material layer 111 and negative electrode active material layer 112 is electrode film 10 described above.

First power generation element 150 includes a sealing material 130. At an end in an in-plane direction, sealing material 130 is attached to current collector 20. For example, sealing material 130 may be heat-sealed to current collector 20. For example, sealing material 130 may be provided along the entire periphery in an in-plane direction. Sealing material 130 may include a resin material and/or the like, for example. Sealing material 130 seals interstices between current collectors 20 that are adjacent to each other in the perpendicular-to-plane direction. The interstices between current collectors 20 are thus sealed with sealing material 130, and thereby cells 140 are formed. A cell 140 is the smallest constituent unit of first power generation element 150. Because it includes a plurality of cells 140, first battery 100 may also be referred to as "a bipolar module" and the like. Each of cells 140 is hermetically sealed. Cells 140 are segregated from each other. Each of cells 140 includes positive electrode active material layer 111, first separator 120, and negative electrode active material layer 112.

### First Separator

First separator 120 is capable of separating positive electrode active material layer 111 from negative electrode active material layer 112. First separator 120 is electrically insulating. First separator 120 may include at least one selected from the group consisting of a resin film, an inorganic particle layer, and an organic particle layer, for example. First separator 120 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The average pore size of the resin film may be in a range defined by any one or two endpoints selected from the group consisting of 0.01 µm, 0.1 µm, 0.5 µm, and 1 µm, for example. The average pore size of the resin film may be in the range of 0.01 µm to 1 µm, for example. "Average pore size" may be measured by mercury porosimetry. The Gurley value of the resin film may be in a range defined by any one or two endpoints selected from the group consisting of 50 s/100cm³, 100 s/100cm³, 150 s/100cm³, 200 s/100cm³, and 250 s/100cm³, for example. The Gurley value of the resin film may be in the range of 50 s/100cm³ to 250 s/100cm³, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of PE, PP, polyamide (PA), PAI, PI, aromatic polyamide (aramid), polyphenylene ether (PPE), and derivatives of these, for example. The resin film may be formed by stretching, phase separation, and/or the like, for example. The thickness of the resin film may be in a range defined by any one or two endpoints selected from the group consisting of 5 µm, 10 µm, 15 µm, 20 µm, 25 µm, 30 µm, 40 µm, and 50 µm, for example. The thickness of the resin film may be in the range of 5 µm to 50 µm, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer and the PP layer may be independently in a range defined by any one or two endpoints selected from the group consisting of 3 µm, 5 µm, 10 µm, 15 µm, and 20 µm. The thickness of the PE layer and the PP layer may be independently in the range of 3 µm to 20 µm, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode active material layer 111, or may be formed on the side facing the negative electrode active material layer 112. The inorganic particle layer may be formed on the surface of positive electrode active material layer 111, or may be formed on the surface of negative electrode active material layer 112.

The inorganic particle layer is porous. The inorganic particle layer includes inorganic particles. The inorganic particles may also be called "an inorganic filler". Gaps between the inorganic particles form pores. The thickness of the inorganic particle layer may be in a range defined by any one or two endpoints selected from the group consisting of 0.5 µm, 1 µm, 3 µm, 5 µm, and 10 µm, for example. The thickness of the inorganic particle layer may be in the range of 0.5 µm to 10 µm, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The shape of the inorganic particles is not particularly limited. The inorganic particles may be spherical, rod-like, plate-like, fibrous, and/or the like, for example. The D50 of the inorganic particles may be in a range defined by any one or two endpoints selected from the group consisting of 0.1 µm, 0.5 µm, 1 µm, 3 µm, 5 µm, and 10 µm, for example. The D50 of the inorganic particles may be in the range of 0.1 µm to 10 µm, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

First separator 120 may include an organic particle layer, for example. First separator 120 may include an organic particle layer instead of the resin film, for example. First separator 120 may include an organic particle layer instead of the inorganic particle layer, for example. First separator 120 may include both the resin film and an organic particle layer. First separator 120 may include both the inorganic particle layer and an organic particle layer. First separator 120 may include the resin film, the inorganic particle layer, and an organic particle layer.

The thickness of the organic particle layer may be in a range defined by any one or two endpoints selected from the group consisting of 0.1 µm, 0.5 µm, 1 µm, 5 µm, 10 µm, 20 µm, and 50 µm, for example. The thickness of the organic particle layer may be in the range of 0.1 µm to 50 µm, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The D50 of the organic particles may be in the range of 0.1 to 10 µm, for example.

First separator 120 may include a mixed layer, for example. The mixed layer includes both inorganic particles and organic particles.

First separator 120 may include a solid electrolyte layer, for example. The solid electrolyte layer includes a solid electrolyte and a binder. The solid electrolyte may be selected from the materials mentioned above as components of electrode film 10, for example.

### Electrolyte Solution

First battery 100 may include an electrolyte solution, for example. The electrolyte solution is a liquid electrolyte. The electrolyte solution includes a solute and a solvent. The concentration of the solute may be in a range defined by any one or two endpoints selected from the group consisting of 0.5 mol/L, 1.0 mol/L, 1.5 mol/L, 2.0 mol/L, and 2.5 mol/L, for example. The concentration of the solute may be in the range of 0.5 mol/L to 2.5 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of LiPF₆, LiBF₄, LiClO₄, LiAsF₆, LiSbF₆, LiN(SO₂F)₂ "LiFSI", LiN(SO₂CF₃)₂ "LiTFSI", LiB(C₂O₄)₂ "LiBOB", LiBF₂(C₂O₄) "LiDFOB", LiPF₂(C₂O₄)₂ "LiDFOP", LiPO₂F₂, FSO₃Li, LiI, LiBr, and derivatives of these, for example. It should be noted that the word enclosed in double quotation marks, such as "LiFSI", represents a common name or an abbreviation of the substance.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC), for example. The volume ratio "(cyclic carbonate):(chain carbonate)" may be in a range defined by two endpoints that are any two sets selected from the group consisting of "1:9", "2:8", "3:7", "4:6", "5:5", "6:4", "7:3", "8:2", and "9:1", for example. Relationships such as the volume ratio "(cyclic carbonate):(chain carbonate)=1:9 to 9:1" may be satisfied, for example.

The solvent may include a cyclic carbonate (such as EC, PC) and a fluorinated cyclic carbonate (such as FEC), for example. The volume ratio "(cyclic carbonate):(fluorinated cyclic carbonate)" may be in a range defined by two endpoints that are any two sets selected from the group consisting of "99:1", "90:10", "70:30", "50:50", "30:70", "10:90", and "1:99", for example. Relationships such as the volume ratio "(cyclic carbonate): (fluorinated cyclic carbonate)=99:1 to 1:99" may be satisfied, for example.

The solvent may include EC, FEC, EMC, DMC, and DEC, for example. The volume ratio of these components may satisfy the relationship represented by the relational expression "V_{EC}+V_{FEC}+V_{EMC}+V_{DMC}+V_{DEC}=10", for example. In the relational expression, each of "V_{EC}, V_{FEC}, V_{EMC}, V_{DMC}, V_{DEC}" represents the volume ratio of EC, FEC, EMC, DMC, DEC, respectively. The relationships "1≤V_{EC}≤4", "0≤V_{FEC}≤3", "(V_{EC}+V_{FEC})≤4", "0≤V_{EMC}≤9", "0≤V_{DMC}≤9", "0≤V_{DEC}≤9", and "6≤(V_{EMC}+V_{DMC}+V_{DEC})≤9" are satisfied. For example, the relationship "1≤V_{EC}≤2" or "2≤V_{EC}≤3" may be satisfied. For example, the relationship "1≤V_{FEC}≤2" or "2≤V_{FEC}≤4" may be satisfied. For example, the relationship "3≤V_{EMC}≤4" or "6≤V_{EMC}≤8" may be satisfied. For example, the relationship "3≤V_{DMC}≤4" or "6≤V_{DMC}≤8" may be satisfied. For example, the relationship "3≤V_{DEC}≤4" or "6≤V_{DEC}≤8" may be satisfied.

The composition of the solvent in volume ratio may be "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4", or the like, for example.

The electrolyte solution may include an ether-based solvent, for example. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include a freely-selected additive. The amount to be added (the mass fraction to the total amount of the electrolyte solution) may be in a range defined by any one or two endpoints selected from the group consisting of 0.01%, 0.05%, 0.1%, 1%, 3%, and 5%, for example. The amount to be added may be in the range of 0.01% to 5%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as an additive (a trace component). The additive may include at least one selected from the group consisting of LiBF₄, LiFSI, LiTFSI, LiBOB, LiDFOB, LiDFOP, LiPO₂F₂, FSO₃Li, LiI, LiBr, HFE, DOX, PC, FEC, and derivatives of these, for example.

The electrolyte solution may include an ionic liquid, for example. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

First battery 100 may include a gelled electrolyte, for example. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

### Second Battery

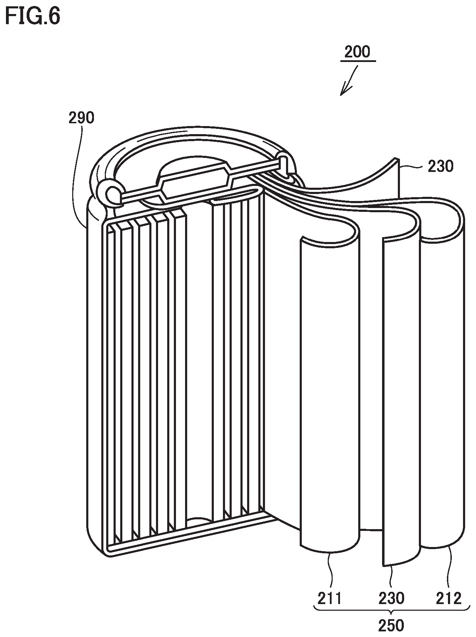

Fig. 6 is a schematic view illustrating a second battery according to the present embodiment. A second battery 200 is an example of a battery according to the present embodiment. Second battery 200 includes a second power generation element 250. Second power generation element 250 is a wound-type one. Second power generation element 250 has a monopolar structure.

Second battery 200 includes a second exterior package 290. Second exterior package 290 accommodates second power generation element 250. The outer shape of second exterior package 290 may be cylindrical or prismatic, for example. Second exterior package 290 may be a case made of metal, for example. Second exterior package 290 may be sealed by swaging, laser processing, and/or the like, for example.

### Second Power Generation Element

Second power generation element 250 includes a stack. The stack includes a positive electrode 211, a second separator 230, and a negative electrode 212 in this order. The number of second separator 230 may be one, or may be two or more. For example, the stack may include positive electrode 211, second separator 230, negative electrode 212, and second separator 230 in this order. Each of positive electrode 211, second separator 230, and negative electrode 212 has a belt-like planar shape. The stack is wound spirally. The stack is wound along the length direction of the electrode. At least one of positive electrode 211 and negative electrode 212 includes electrode film 10. The material mentioned above as the material of first battery 100 may also be used as the material of second battery 200 without limitation.

## Claims

1. An electrode comprising, in sequence:
a current collector (20); and
an electrode film (10), wherein
the electrode film (10) includes an electrode active material and a fibrous binder,
in a cross section of the electrode film (10),
a gap (6) is formed between a first wall surface (6a) and a second wall surface (6b) that face each other,
the first wall surface (6a) is closer to the current collector (20) than the second wall surface (6b) is, and
in the gap (6), the fibrous binder extends from the first wall surface (6a) to the second wall surface (6b).

2. The electrode according to claim 1, wherein each of the first wall surface (6a) and the second wall surface (6b) extends in a direction crossing a thickness direction of the electrode film (10).

3. The electrode according to claim 1, wherein
the gap (6) has an aspect ratio of 2 or more, and
the aspect ratio refers to a ratio of a major-axis diameter of the gap (6) to a minor-axis diameter thereof in a cross section of the electrode film (10).

4. The electrode according to any one of claims 1 to 3, wherein a ratio of a major-axis diameter of the gap (6) to an average major-axis diameter of the electrode active material is 3 or more.

5. The electrode according to any one of claims 1 to 3, wherein in the gap (6), a straight line having a length of 50 µm drawn to extend parallel to a major-axis diameter of the gap (6) crosses five or more pieces of the fibrous binder.

6. The electrode according to any one of claims 1 to 3, wherein the electrode film (10) is a self-standing film.

7. The electrode according to any one of claims 1 to 3, wherein
a cross section of the current collector (20) has a wavy shape in which crests and troughs alternate, and
between the crests (20a) that are adjacent to each other, the gap (6) is formed.

8. A battery comprising the electrode (50) according to any one of claims 1 to 3.

9. The battery according to claim 8, having a bipolar structure.
